Europäisches Patentamt

European Patent Office

Office européen des brevets

(11) Veröffentlichungsnummer: **0 142 770**
**A1**

(12) **EUROPÄISCHE PATENTANMELDUNG**

(21) Anmeldenummer: **84113364.8**

(22) Anmeldetag: **06.11.84**

(51) Int. Cl.⁴: **A 45 C 5/14**
**B 60 B 33/06**

(30) Priorität: **17.11.83 CH 6180/83**

(43) Veröffentlichungstag der Anmeldung:
**29.05.85 Patentblatt 85/22**

(84) Benannte Vertragsstaaten:
**AT BE DE FR GB IT LU NL SE**

(71) Anmelder: **Kägi, Erich A.**
**Im oberen Boden 140**
**CH-8049 Zürich(CH)**

(71) Anmelder: **Rietschi, Amandus W.**
**Obstgartenstrasse 1**
**CH-8703 Erlenbach(CH)**

(72) Erfinder: **Kägi, Erich A.**
**Im oberen Boden 140**
**CH-8049 Zürich(CH)**

(72) Erfinder: **Rietschi, Amandus W.**
**Obstgartenstrasse 1**
**CH-8703 Erlenbach(CH)**

(74) Vertreter: **Blum, Rudolf Emil Ernst et al,**
**c/o E. Blum & Co Patentanwälte Vorderberg 11**
**CH-8044 Zürich(CH)**

(54) In Karre verwandelbares Tragbehältnis und Reisekofferset mit Tragbehältnis.

(57) Der in eine Karre verwandelbare Reiskoffer (1) hat zwei Räderpaare (27, 27; 39, 39) bzw. Rollen oder Walzen, welche in Normalebenen zu ihren Drehachsen (26, 38) in Ausnehmungen (40, 41) des Koffers (1) ein- und aus diesen ausschwenkbar sind. Dabei sind die vier Räder über gelenkig miteinander verbundene Hebel (15, 17, 20, 32) von einem, aus dem Koffer (1) herausschwenkbaren und in diesen versenkbaren Stossgestänge (8, 9, 10) gleichzeitig in ihre Ruhe- bzw. in ihre Arbeitslage schwenkbar. In ihrer Ruhelage liegen alle Räder parallelachsig. Auf diese Weise stützt sich der Koffer (1) stabil auf der Fahrbahn (29) ab und seine Deckfläche (2) kann als Auflage für weiteres Gepäck dienen, für welches das Stossgestänge (8, 9, 10) einen Anschlag bildet.

FIG. 2

- 1 -

In Karre verwandelbares Tragbehältnis und Reisekofferset mit Tragbehältnis

-------------------------------------------------------------

Die vorliegende Erfindung betrifft ein in eine
Karre verwandelbares Tragbehältnis, insbesondere Reisekoffer, mit mindestens zwei Rollelemente, welche in Normalebenen zu ihren Drehachsen in Ausnehmungen des Behältnisses ein- und aus diesen ausschwenkbar sind, wobei die Rollelemente über gelenkig miteinander verbundene Hebel von
einem aus dem Behältnis herausnehmbaren und in dieses versenkbaren Griffgestänge gleichzeitig in ihre Ruhe- bzw. in
ihre Arbeitslage schwenkbar sind,sowie ein Reisekofferset
mit Tragbehältnis.

Aus der FR-PS 867 582 ist bereits 1941 ein rollender Koffer bekannt geworden, welcher einen innerhalb
den Umrissen des Koffers versenkbaren, als Griff dienenden
Rahmen aufweist, der über ein beiderends dreh-schwenkbar
gelagertes Gestänge beidseits des Koffers je eine Radgabel
mit Rad zum Aus- bzw. Einschwenken liegt. Die beiden Räder
sind koaxial zueinander angeordnet. Durch Ausziehen des
Griffrahmens erfolgt das Ausfahren der Räder aus zwei zu
diesem Zweck vorgesehenen Nischen im Koffer. In eingefahrenem Zustand ragen weder Räder noch Gestängeteile über
die Kofferumrisse heraus. Dieser zweirädige Koffer ist
für das Beladen seiner Deckfläche ungeeignet, da diese gegenüber der Fahrbahn schwenkbar ist.

Hb/dp
1.11.1984

EU 1222

Es sind zwar noch andere derartige Koffern mit zwei koaxialen versenkbaren Rollen bekannt, deren Konstruktion und Betätigung jedoch komplizierter ist, als die in der französischen Patentschrift offenbarte Lösung. Es handelt sich um die in den US-PS 3 917 038, US-PS 4 273 222, der DE-OS 25 10 720 sowie der GB-PS 424 204 dargestellten Konstruktionen.

Die vorliegende Erfindung bezweckt die Schaffung eines in eine Karre verwandelbaren Tragbehältnisses, bei welchem die Deckelfläche des Behältnisses als Aufnahmefläche für weiteres Reisegepäck dienen kann und bei welcher sich das Behältnis stabil auf der befahrenen Fahrbahn abstützt.

Die Lösung dieser Aufgabe liegt darin, dass erfindungsgemäss die Rollelemente in Fahrtrichtung hintereinanderliegen, wobei in ihrer Ruhelage alle Räder parallelachsig sind, derart, dass das Behältnis sich stabil auf der Fahrbahn abstützt, dass mindestens ein Rollelement bezüglich seiner Spur schwenkbar ist, und dass die Rollelemente gleichzeitig über das Griffgestänge und die Hebel ein- bzw. ausfahrbar sind.

Bei einer bevorzugten Ausführungsform sind vier Rollelemente vorgesehen, wobei jeweils zwei um eine Achse drehbar sind, die parallel zueinander liegen. Die vorderen Rollelemente sind Kugeln und die hinteren Rollelemente sind Räder, die bezüglich ihrer Spur schwenkbar sind. Dadurch können der Fahrkomfort und -eigenschaften bedeutend verbessert werden.

Ferner ist ein Reisekofferset mit einem Tragbehältnis erfindungsgemäss gekennzeichnet durch mindestens ein weiteres Tragbehältnis, das auf die Karre auflegbar ist, wobei das weitere Tragbehältnis mit Ansätzen versehen ist, die in die Oeffnung zur Aufnahme des Griffgestänges eingreifen, um das weitere Tragbehältnis gegen Verrutschen zu sichern.

Im folgenden wird die Erfindung anhand der bei-

- 3 -                    0142770

liegenden Figuren erläutert.

Es zeigen in rein schematischer Darstellung:

Fig. 1 ein Ausführungsbeispiel eines erfindungsgemässen Tragbehältnisses, wie es normalerweise, beispielsweise als Reisekoffer, getragen wird, mit weggehobener Seitenwand, zwecks Zurschaustellung des Fahrmechanismus,

Fig. 2 das Tragbehältnis gemäss Fig. 1, mit ausgefahrenen Rädern sowie Handgriff und Stütze zum Schieben oder Ziehen des als Ladebrücke dienenden Tragbehältnisses,

Fig. 3 ein weiteres Ausführungsbeispiel eines erfindungsgemässen Tragbehältnisses,

Fig. 4 ein anderes Ausführungsbeispiel eines erfindungsgemässen Tragbehältnisses,

Fig. 5 eine Ansicht des erfindungsgemässen Tragbehältnisses mit zusätzlichen Rollen und Handgriff,

Fig. 6 eine Ansicht eines Reisekoffersets mit einem Tragbehältnis, und

Fig. 7 eine Einzelheit des in Fig. 6 dargestellten Reisekoffersets, welche die Lagesicherung der weiteren Tragbehältnisse zeigt.

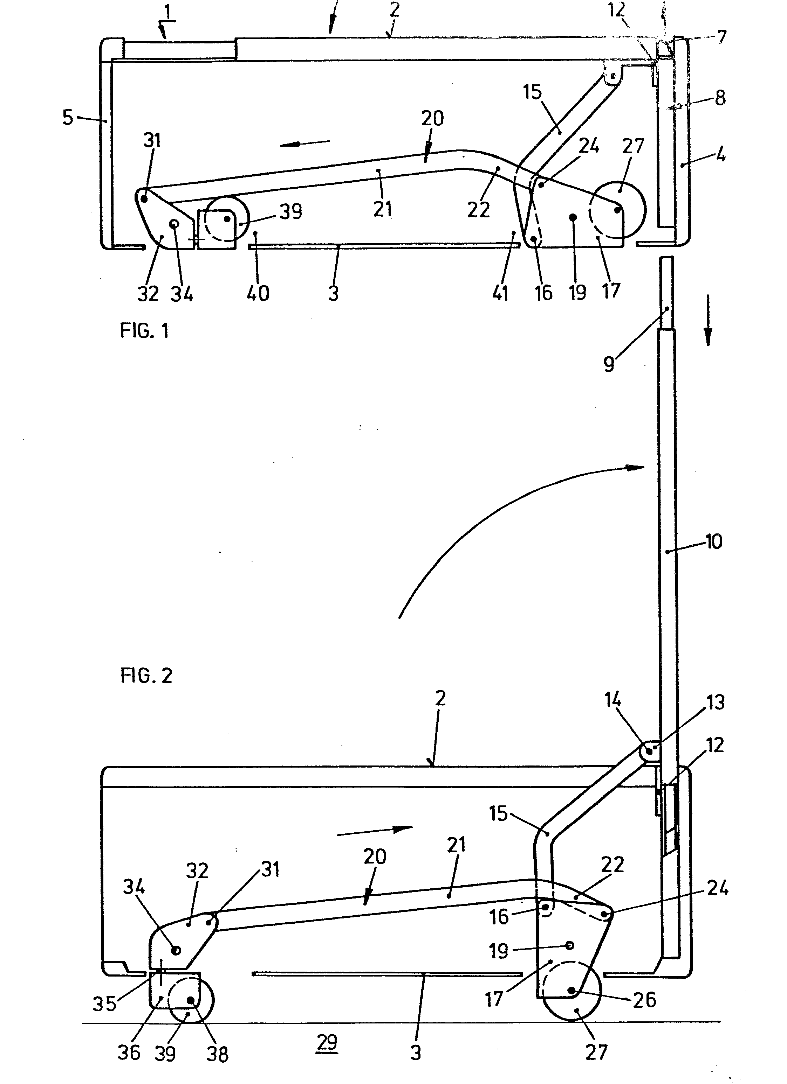

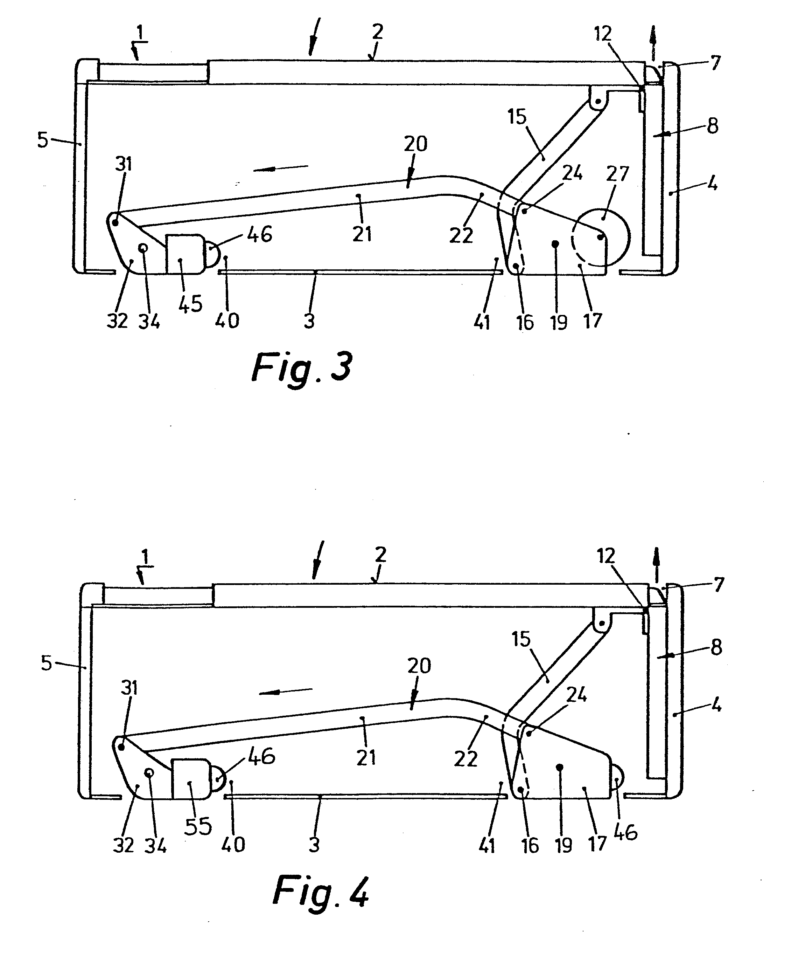

Ein Behältnis 1, beispielsweise in Form eines tragbaren Reisekoffers, ist in Fig. 1 mit der Deckelseite 2, seinem Boden 3 sowie einer hinteren äusseren Seitenwand 4 und einer vorderen Seitenwand 5 dargestellt. Eine weitere seitliche Seitenwand ist weggehoben, um den Betätigungsmechanismus mit den Rollelementen zu zeigen. Die hintere, äussere Seitenwand 4 bildet mit der inneren einen Hohlraum 7. Dieser dient der Aufnahme eines unteren Teils eines Stossgestänges 8 mit in ausgezogenem Zustand dargestelltem Handgriff 9. Das Stossgestänge 8 weist eine Stütze 10 auf, die mittels eines festen Schwenklagers 12 am Koffer befestigt ist. In ausgeschwenktem Zustand (Fig. 2) liegt unmittelbar über der Deckelseite 2 ein an der Stütze 10 befestigter Lappen 13, der über ein Drehschwenklager 14 mit einem gebogenen Hebel 15 verbunden ist. Am anderen Ende des Hebels 15 ist in einem zweiten Drehschwenklager 16 eine Schwenkplatte 17 befestigt, die ihrerseits um ein zweites festes Schwenklager 19 schwenkbar ist. Ein weiteres Verbindungsgestänge 20, bestehend aus einem Langteil 21 und einem dazu abgewinkelten Kurzteil 22 ist mittels eines weiteren Drehschwenklagers 24 mit der Schwenkplatte 17 verbunden. Diese Schwenkplatte 17 ist Trägerin eines Lagers 26 mit einem Rollelement 27.

In den beiden Figuren sind die Rollelemente vorn und hinten, d.h. in Fahrtrichtung hintereinanderliegend, je als ein Rad bzw. eine Rolle oder Walze dargestellt. Es ist dabei möglich, vorne und hinten je zwei Räder vorzusehen bzw. vorne und/oder hinten eine entsprechend breite Walze sowie kein bzw. ein weiteres Rad oder aber vorn zwei in ausgefahrener Lage nicht schwenkbare Räder und hinten eines, vorzugsweise schwenkbares Rad.

Die ausgefahren dargestellten Rollelemente stützen sich auf eine Fahrbahn 29. Das Verbindungsgestänge 20 ist mit seinem anderen freien Ende in einem Drehschwenklager 31 einer weiteren Schwenkplatte 32 gelagert. Diese Schwenkplatte 32, als vordere Schwenkplatte bezeichnet, lagert selbst in einem festen Schwenklager 34. Die Schwenkplatte 32 hat einen Zapfen 35, auf dem drehbar ein Halter 36 mit einem Lager 38 und einem Rollelement 39 befestigt ist.

Wie angedeutet, finden in zwei Nischen 40 und 41 im Bereich des Behältnisbodens 3 die eingeschwenkten Fahrteile des Behältnisses Platz.

Das in Fig. 1 dargestellte Behältnis kann mit einem, gegebenenfalls zwei Handgriffen versehen werden. Das Behältnis, in Form eines Reisekoffers, kann in normaler Art und Weise getragen werden. Besteht die Möglichkeit des leichteren Fortbewegens, beispielsweise auf ebenem Boden, so wird das bisher umgeklappte Stossgestänge 8 aus der Versenkung im Bereich der Deckelseite 4, beispielsweise in Form eines Rahmens, um das feste Schwenklager 12 aufgeklappt und der Handgriff 9 aus der Stütze 10 ausgezogen.

Durch diese Bewegung um 90° hat auch das Drehschwenklager 14 im Lappen 13 eine 90°-Schwenkung vollführt und dabei den Hebel 15 in die entsprechend obere Lage gezogen. Dadurch wird, um das Drehschwenklager 16 drehend und angehoben, die Schwenkplatte 17 um ca. 90° geschwenkt, wodurch das Verbindungsgestänge 20, wie in Fig. 2 ersichtlich, ohne Stütze des Drehschwenklagers 16 in die dargestellte Lage gelangt, in welcher das Rollelement 27, über den Boden 3 nach unten vorstehend, zum Einsatz kommt. Durch die Drehung des ganzen Gestänges zur Betätigung der Rollelemente im Uhrzeigersinn zieht das Verbindungsgestänge 20 am Drehschwenklager 31 die Schwenkplatte 32 nach rechts, wobei diese sich um ihr festes Schwenklager um 90° dreht. Durch diese Bewegung wird auch der Zapfen 35 mit dem Drehhalter 36 aus dem Bereich des Bodens 3 ausgeschwenkt. Das Radlager 38 mit dem Rollelement 39 dient als weitere Fahrstütze für das Behältnis 1. Dabei dient die Deckelseite 2 als Ladebühne, auf welcher weitere Gepäckstücke, wie bei einer Karre, geladen werden können. Das Ganze kann am Handgriff 9 gezogen oder gestossen werden. Das Gefährt ist stabil auf der Fahrbahn abgestützt.

Zum Wiederverwandeln in einen Trag-Reisekoffer wird der Handgriff 9 in die Stütze 10 geschoben und die rahmenförmige Stütze 10 um das feste Schwenklager 12 im Gegenuhrzeigersinn in die entsprechende Ausnehmung im Bereich der Deckelseite 2 abgeklappt. Durch diese Bewegung erfolgt eine Schwenkung der beiden Schwenkplatten 17 und 32 im Gegenuhrzeigersinn, so dass der ganze Fahrmechanismus in den Nischen 40 und 41 des Behältnisses 1 verschwindet. Es ist möglich, diesen Schwenkmechanismus so auszubilden, dass keine Teile über die normalen Reisekofferkonturen vorstehen.

Bei dem in Fig. 3 dargestellten Ausführungsbeispiel ist an der vorderen Schwenkplatte 32 eine in einem Käfig 45 gelagerte Kugel 46 vorgesehen. Es ist aber auch möglich, das Rad 27 durch eine Kugel (nicht dargestellt) zu ersetzen. Dadurch kann die Konstruktion vereinfacht werden, weil die schwenkbare Aufhängung des Rades entfallen kann. Ferner wird das Einziehen der Rollelemente 27,46 erleichtert.

Bei dem in Fig. 4 dargestellten Ausführungsbeispiel sind vorne und hinten in Käfig gelagerte Kugeln 46 vorgesehen, wodurch die Bewegungsfreiheit weitgehendst gewährleistet ist.

Wie vorstehend bereits erwähnt, sind verschiedene Anordnungsmöglichkeiten für die Räder und Walzen vorgesehen. Neben diesen ist es möglich, vorn eine Kugel und hinten zwei Räder oder vorn zwei Räder und hinten eine Kugel vorzusehen. Eine weitere Möglichkeit besteht darin, vorne zwei Räder und hinten zwei Kugeln oder umgekehrt vorzusehen. Als letzte Möglichkeit bietet es sich an, vorne und hinten Kugeln vorzusehen.

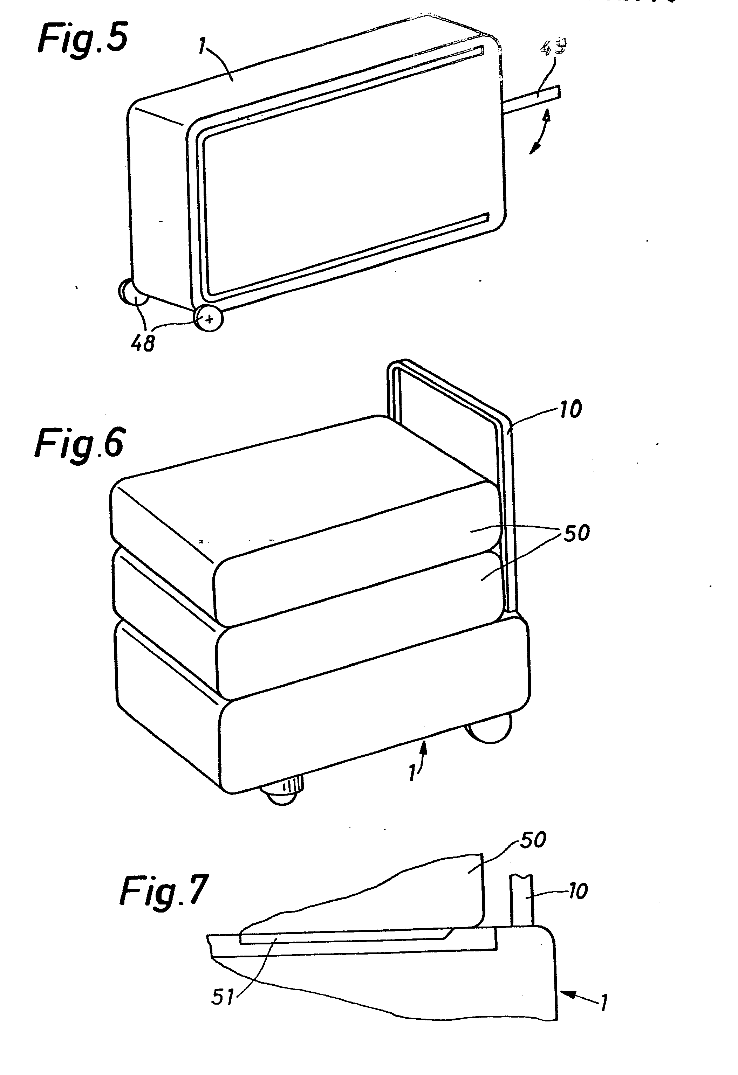

Wie Fig. 5 zeigt, kann das vorstehend beschriebene Tragbehältnis zusätzlich mit zwei Rädern oder Rollen 48, die an einer Kante drehbar angeordnet sind, und einem in das Tragbehältnis einklappbaren bzw. aus diesem herausklappbaren Griff 49 versehen sein.

In Fig. 6 ist ein Reisekofferset dargestellt, der aus einem Tragbehältnis, wie in Fig. 3 dargestellt ist, und zwei weiteren Tragbehältnissen 50 besteht. Um die Tragbehältnisse gegen Verrutschen zu sichern, sind diese mit Ansätzen 51 versehen, die zum einen in die Ausnehmung für das Griffgestänge eingreifen und zum anderen in rillenförmige Ausnehmungen in den Tragbehältnissen eingreifen. Diese Ansätze können rippen- oder noppenförmig sein.

Patentansprüche
━━━━━━━━━━━━━━━━━━━━━━━━

1. In Karre verwandelbares Tragbehältnis, insbesondere Reisekoffer mit mindestens zwei Rollelementen, welche in Normalebenen zu ihren Drehachsen in Ausnehmungen des Behältnisses ein- und aus diesen ausschwenkbar sind, wobei die Rollelemente über gelenkig miteinander verbundene Hebel von einem aus dem Behältnis herausnehmbaren und in dieses versenkbaren Griffgestänge gleichzeitig in ihre Ruhe- bzw. in ihre Arbeitslage schwenkbar sind, dadurch gekennzeichnet, dass die Rollelemente (27,39,46) in Fahrtrichtung hintereinanderliegen, wobei in ihrer Ruhelage alle Räder parallelachsig sind, derart, dass das Behältnis (1) sich stabil auf der Fahrbahn (29) abstützt, dass mindestens ein Rollelement (27,39,46) bezüglich seiner Spur schwenkbar ist, und dass alle Räder gleichzeitig über das Griffgestänge (8,9,10) und die Hebel (15,17,20,32) ein- bzw. ausfahrbar sind.

2. Behältnis nach Anspruch 1, dadurch gekennzeichnet, dass drei Rollelemente (27,39,46) vorgesehen sind, wobei zwei Rollelemente um eine Achse und das dritte Rollelement um eine zur ersten Achse parallelen Achse drehbar ist, und dass das bzw. die vorderen und/oder hinteren Rollelemente bezüglich ihrer Spur schwenkbar sind.

3. Behältnis nach Anspruch 1, dadurch gekennzeichnet, dass vier Rollelemente (27,39,46) vorgesehen sind, wobei jeweils zwei um eine Achse drehbar sind, die parallel zueinander liegen, und dass die vorderen und/oder hinteren Rollelemente bezüglich ihrer Spur schwenkbar sind.

4. Behältnis nach einem der Ansprüche 1-3, dadurch gekennzeichnet, dass die Rollelemente (27,39,46) Räder oder Kugeln sind.

5. Behältnis nach einem der Ansprüche 1-3, dadurch gekennzeichnet, dass die Rollelemente (27,39) Rollen oder Walzen sind.

6. Behältnis nach einem der Ansprüche 1-4, dadurch gekennzeichnet, dass das bzw. die hinteren Rollelemente Räder (27) sind.

7. Behältnis nach Anspruch 1, dadurch gekennzeichnet, dass die die Rollelemente (27,39) tragenden, um feste Achsen schwenkbaren Lenker (17,32) über einen gemeinsamen, mit beiden Lenkern (17,32) drehverbundenen, z.B. einen Winkel bildenden Hebel (20,21,22) miteinander verbunden sind.

8. Behältnis nach Anspruch 1, dadurch gekennzeichnet, dass das Griffgestänge (8,9,10) über einen schwenkbar mit diesem verbundenen Hebel (15) mit einem Verbundgestänge, bestehend aus den Lenkern (17,31) und dem Verbindungshebel (20), schwenkbar verbunden sind.

9. Behältnis nach Anspruch 1, dadurch gekennzeichnet, dass alle zur Ein- und Ausfahrmechanik der Räder gehörenden Teile im Tragbehältnis (1) versenkbar sind und nicht über dessen Konturen vorstehen.

10. Reisekofferset im Tragbehältnis nach einem der Ansprüche 1-9, gekennzeichnet durch mindestens ein weiteres Tragbehältnis (50), das auf die Karre (1) auflegbar ist, wobei das weitere Tragbehältnis (50) mit Ansätzen (51) versehen ist, die in die Oeffnung zur Aufnahme des Griffgestänges (9,10) eingreifen, um das weitere Tragbehältnis (51) gegen Verrutschen zu sichern.

0142770

FIG. 1

FIG. 2

0142770

**Fig. 3**

**Fig. 4**

Fig.5

Fig.6

Fig.7

Europäisches
Patentamt

**EUROPÄISCHER RECHERCHENBERICHT**

Nummer der Anmeldung

EP 84 11 3364

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 178 197 (C. BOATNER)<br><br>* Spalte 2, Zeilen 3-20; Figuren 3,4 *<br><br>--- | 1,3,4, 6 | A 45 C 5/14<br>B 60 B 33/06 |
| A | DE-A-2 736 941 (M. WOTSCHKE)<br><br>* Insgesamt *<br><br>--- | 1,5 | |
| A | US-A-4 122 924 (D. WASSERMAN)<br><br>* Figuren 1-4 *<br><br>--- | 1 | |
| A | US-A-1 895 677 (PINHEIRO)<br><br>* Figuren 1-12 *<br><br>--- | 1,2,4, 6 | RECHERCHIERTE SACHGEBIETE (Int. Cl.4) |
| A | DE-A-2 421 759 (LIC)<br><br>* Seite 3, Zeile 17 - Seite 5, Zeile 6; Figuren 1,2 *<br><br>--- | 3,4,6 7 | A 45 C<br>B 60 B |
| A | FR-A-1 292 341 (J. GRINFEDER)<br><br>* Figuren 1,2 *<br><br>---<br><br>-/- | 5 | |

Der vorliegende Recherchenbericht wurde für alle Patentansprüche erstellt.

| Recherchenort | Abschlußdatum der Recherche | Prüfer |
|---|---|---|
| DEN HAAG | 11-02-1985 | SIGWALT C. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-E- 51 644 (P. DENORMANDIE)<br><br>* Seite 3, Zeilen 3-26; Figuren 7,8 *<br><br>--- | 4,6,9 | |
| D,A | US-A-4 273 222 (K. CASSIMALLY et al)<br><br>* Figuren 1-4, 16-20 *<br><br>--- | 8,10 | |
| A | US-A-3 522 955 (J.W. WARNER)<br><br>* Figuren 1-3, 11 *<br><br>--- | 10 | |
| A | US-A-4 254 850 (H.E. KNOWLES)<br><br>--- | | RECHERCHIERTE SACHGEBIETE (Int. Cl.4) |
| A | DE-B-1 184 472 (H. SCHULZE)<br><br>--- | | |
| A | DE-A-2 063 620 (K. CASSIMALLY)<br><br>----- | | |

Der vorliegende Recherchenbericht wurde für alle Patentansprüche erstellt.

| Recherchenort | Abschlußdatum der Recherche | Prüfer |
|---|---|---|
| DEN HAAG | 11-02-1985 | SIGWALT C. |